# FASCICULE DE BREVET EUROPEEN

(11) **EP 0 860 928 B1**
(45) Date de publication et mention de la délivrance du brevet: **03.11.2004**
(21) Numéro de dépôt: 98400270.9
(22) Date de dépôt: 06.02.1998
(51) Int. Cl.: H02K 1/26, H02K 1/28, H02K 3/487

(54) **Arbre de rotor d'une machine électrique et procédé de fabrication d'un arbre de rotor**
Rotorwelle für einen Elektromotor und Herstellungsverfahren für eine Rotorwelle
Rotor shaft for an electric machine and manufacturing method for a rotor shaft

(30) Priorité: 07.02.1997 FR 9701448
(43) Date de publication de la demande: 26.08.1998
(73) Titulaire: JEUMONT INDUSTRIE, 92400 Courbevoie (FR)
(72) Inventeur: Debleser, Yves, 7850 Enghien (BE)
(74) Mandataire: Bentz, Jean-Paul

(56) Documents cités:
- EP-A- 0 166 990
- EP-A- 0 509 119
- EP-A- 0 609 645
- DE-C- 603 312
- FR-A- 2 116 827
- FR-A- 2 166 090
- GB-A- 364 027
- GB-A- 523 311
- US-A- 3 870 912
- US-A- 4 562 641
- US-A- 4 739 207

## Description

L'invention est relative au domaine des machines électriques synchrones et concerne plus particulièrement un arbre pour le rotor d'une machine électrique synchrone.

Un tel arbre comporte deux parties d'extrémité et une partie centrale électriquement active comportant des conducteurs, toutes réalisées par usinage et d'une seule pièce.

Les parties d'extrémité sont destinées à être posées sur deux paliers et présentent une forme appropriée.

Dans la partie centrale active qui forme le rotor de la machine, sont usinées des rainures et des encoches profondes pour les conducteurs électriques. Ce sont des bobinages qui doivent être isolés et maintenus dans les encoches par des cales. Ceci constitue une différence de construction entre les machines synchrones et les machines asynchrones, dans lesquelles généralement les conducteurs sont des barres conductrices qui ne nécessitent ni isolation, ni calage.

Ainsi, les coûts et délais de fabrication des arbres pour le rotor de machines synchrones sont aujourd'hui importants. Ils constituent une contrainte dans la fabrication de machines électriques.

GB-A-523 311 décrit un arbre de rotor d'une machine électrique synchrone comprenant les caractéristiques du préambule de la revendication 1.

Cette structure connue d'arbre de rotor conduit à utiliser des cales pour assurer le calage des conducteurs dans leurs encoches respectives et la fermeture de ces dernières. Il est apparu nécessaire de modifier la structure des arbres de rotor de machines synchrones ainsi que leur procédé de fabrication, afin de réduire de façon significative leur coût et leur délai de fabrication.

Pour cela, l'invention propose un arbre de rotor comprenant les caractéristiques énoncées dans la partie caractérisante de la revendication 1.

De préférence, l'empilement est placé entre deux plateaux d'extrémité et les tiges sont soudées sur lesdits plateaux.

Les caractéristiques suivantes peuvent également être prises en considération, isolément ou selon toutes leurs combinaisons techniquement possibles :
- le diamètre de l'empilement est sensiblement identique à celui desdits plateaux d'extrémité ;
- chacun desdits plateaux d'extrémité comporte sur sa face interne un embrèvement, l'empilement de tôles étant encastré par chacune de ses extrémités dans lesdits embrèvements ;
- les tiges passant dans les évidements qui prolongent les encoches, sont en matériau amagnétique ;
- chaque tôle comporte au moins deux zones dépourvues d'encoches mais présentant des évidements pour le passage des tiges qui débouchent, de préférence, sur le bord extérieur de la tôle ;
- les tiges passant dans les évidements desdites zones dépourvues d'encoches, sont en matériau magnétique ;
- les tôles sont collées pour améliorer la tenue en torsion de l'empilement;
- l'empilement de tôles comporte des canaux de refroidissement qui se prolongent, le cas échéant, dans les plateaux d'extrémité ;
- lesdits canaux de refroidissement communiquent, par l'intermédiaire de canaux ménagés dans les conducteurs, avec des évents de ventilation prévus sur la périphérie de l'empilement ;
- les encoches de chaque tôle se prolongent, du côté opposé au bord extérieur de la tôle, par une ouverture correspondant à un canal de refroidissement ;
- les évidements pour les tiges ménagent un espace libre entre la tôle et les tiges, lorsque celles-ci sont en place, de façon à créer des évents de ventilation.

L'invention concerne également un procédé de fabrication d'un arbre de rotor de machine électrique synchrone conforme à la revendication 13.

De façon avantageuse, les encoches et les évidements sont formés dans les tôles par découpage, notamment au moyen d'un faisceau laser, car les tôles sont minces.

L'invention sera mieux comprise et d'autres buts, avantages et caractéristiques de celle-ci apparaîtront plus clairement à la lecture de la description suivante de modes non limitatifs de réalisation de l'invention, faite au regard des dessins annexés, sur lesquels :
- la figure 1 est une vue partielle en plan d'un arbre de rotor selon l'invention,
- la figure 2 est une vue partielle en perspective et avec une coupe partielle de la partie centrale active de l'arbre de rotor selon l'invention,
- la figure 3 est une demi-vue, selon l'axe de symétrie des pôles, d'une tôle de la partie active de l'arbre de rotor selon l'invention,
- la figure 4 est une vue partielle et en développé de la partie active de l'arbre du rotor selon l'invention,
- la figure 5 est une vue en coupe d'une encoche selon V-V,
- la figure 6 est une vue en coupe d'une encoche, selon VI-VI, au niveau d'un évent de ventilation.

Les éléments communs aux différentes figures seront désignés par les mêmes références.

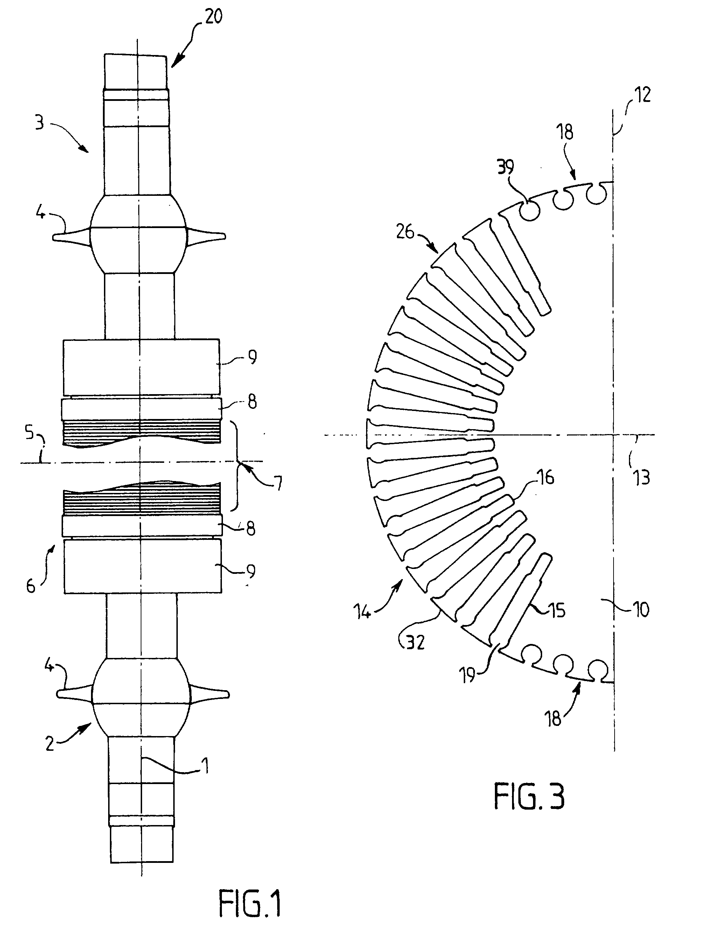

La figure 1 montre un arbre de rotor 20 selon l'invention pour une machine électrique. L'axe de l'arbre porte la référence 1.

Cet arbre comporte deux parties d'extrémité 2 et 3 qui sont destinées au support de l'arbre sur des paliers prévus dans la machine.

La référence 4 désigne des pales de ventilation qui sont fabriquées indépendamment, puis fixées sur chaque partie d'extrémité.

Celles-ci sont symétriques par rapport à l'axe central 5, qui est perpendiculaire à l'axe 1 et qui est également un axe de symétrie.

La partie centrale de l'arbre porte la référence 6.

Elle comporte une zone électriquement active 7 comportant des tôles empilées et maintenue entre deux plateaux d'extrémité 8.

L'ensemble des tôles et des plateaux est placé entre deux frettes 9, chacune d'elles étant reliée à une partie d'extrémité 2, 3 de l'arbre de rotor.

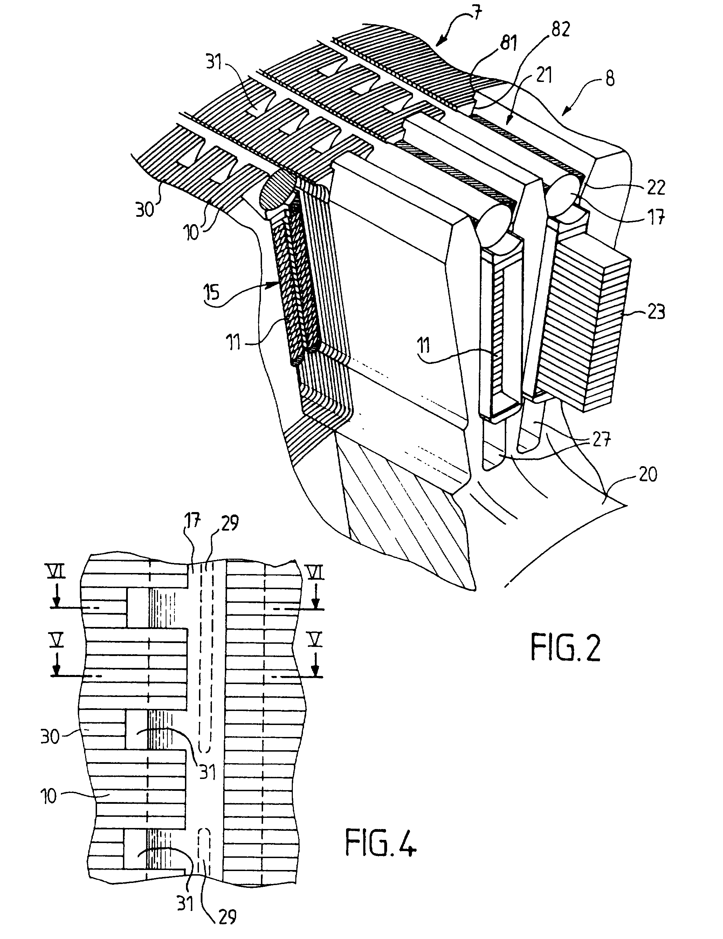

Le diamètre des tôles et donc de l'empilement est sensiblement identique à celui des plateaux d'extrémité 8, ce qui contribue au bon maintien de l'empilement de tôles. Le diamètre des tôles est, de préférence, légèrement inférieur à celui des plateaux d'extrémité comme cela sera décrit en référence à la figure 2.

La figure 2 illustre partiellement un plateau d'extrémité 8 et la zone électriquement active 7 avec des tôles empilées 10 et des conducteurs 11.

Pour un alternateur deux pôles, la figure 3 illustre une demi-coupe selon l'axe 12, axe de symétrie des pôles, d'une tôle 10 qui présente la forme générale d'un disque. La tôle 10 ne présente pas de perçage ou de trou central. L'axe 13 est l'axe de symétrie entre les pôles.

La tôle 10 comporte deux séries d'encoches radiales 15, dont une seule est illustrée sur la figure 3.

Chaque encoche 15 est conçue pour recevoir un conducteur 11. Elle se prolonge vers le bord 26 de la tôle par un évidement 19 présentant une forme arrondie pour la mise en place d'une tige 17. Les tiges 17 seront ainsi disposées à la périphérie du rotor pour assurer une meilleure cohérence.

La référence 32 désigne la portion du bord extérieur de tôle comprise entre deux évidements 19. Dans l'empilement de tôles 10, ces portions 32 forment les dents d'encoche.

Chaque encoche 15 se prolonge du côté opposé à l'évidement 19, par une ouverture 16 dont la largeur (selon la circonférence de la tôle) est inférieure à celle de l'encoche 15.

Les tôles 10 sont des tôles fines, dont l'épaisseur est généralement comprise entre 2 et 3 mm.

Ainsi, les encoches 15, les évidements 19 et les ouvertures 16 peuvent être facilement réalisés par découpage en utilisant par exemple un faisceau laser. Ceci ne serait pas possible avec des tôles épaisses dans lesquelles les encoches sont nécessairement usinées.

Les délais de fabrication des tôles sont donc considérablement raccourcis.

Dans l'exemple illustré à la figure 3, entre les deux séries d'encoches 14, la tôle 10 comporte deux zones 18 diamétralement opposées qui ne comportent pas d'encoches pour créer des parties polaires. Ces zones 18 présentent cependant des évidements 39 pour le passage des tiges 17. De préférence, ces évidements 39 débouchent également sur le bord 26 de la tôle.

Ils peuvent, comme les encoches 15, les évidements 19 et les ouvertures 16, être facilement réalisés par découpage, notamment avec un faisceau laser.

Ce type de tôle permet de réaliser un alternateur deux pôles. L'invention n'est cependant pas limitée à cet exemple de réalisation.

La partie centrale 6 de l'arbre est réalisée de la façon suivante.

Les tôles 10 sont empilées, de façon à ce que les encoches 15 coïncident entre elles.

Les tôles 10 sont, de préférence, préencollées pour améliorer la tenue en torsion de l'empilement.

L'empilement obtenu est placé entre les plateaux d'extrémité 8 qui sont eux-mêmes une partie constitutive de l'arbre 20.

Comme le montre la figure 2, les plateaux d'extrémité 8 comportent des évidements radiaux pour le passage des tiges 17 et des conducteurs. Chacun de ces plateaux présente également, en périphérie de sa face intérieure, un embrèvement 82 dans lequel est encastrée une extrémité de l'empilement de tôles. Cet encastrement des extrémités de l'empilement assure un meilleur maintien de ce dernier. De plus, les épaulements 81 assurent le centrage et le maintien de l'empilement de tôles. Le diamètre de l'empilement est donc légèrement inférieur à celui des plateaux d'extrémité.

Les tiges 17 sont ensuite insérées dans les évidements 19, en passant par les évidements 21 prévus dans les plateaux d'extrémité 8.

Les tiges 17 insérées dans les évidements 39 des parties polaires sont, de préférence, en matériau magnétique pour permettre le passage du flux et celles insérées dans les évidements 19 prolongés par des encoches 15, sont en matériau amagnétique pour éviter les passage du flux d'une dent d'encoche 32 à l'autre.

On exerce une traction sur les tiges 17, de façon à compresser les tôles préencollées.

Au cours de cette opération, les tôles se collent entre elles. On soude alors les tiges 17 sur les plateaux d'extrémité 8. La référence 22 désigne un cordon de soudure.

Après le soudage des tiges sur les plateaux d'extrémité, on relâche les tiges. Celles-ci maintiennent rigide l'empilement de tôles.

Les conducteurs sont ensuite insérés dans les encoches 15, dans lesquelles ils sont calés au moyen des tiges 17. Les conducteurs à l'extrémité des plateaux sont enfin reliés entre eux pour former des enroulements électriques.

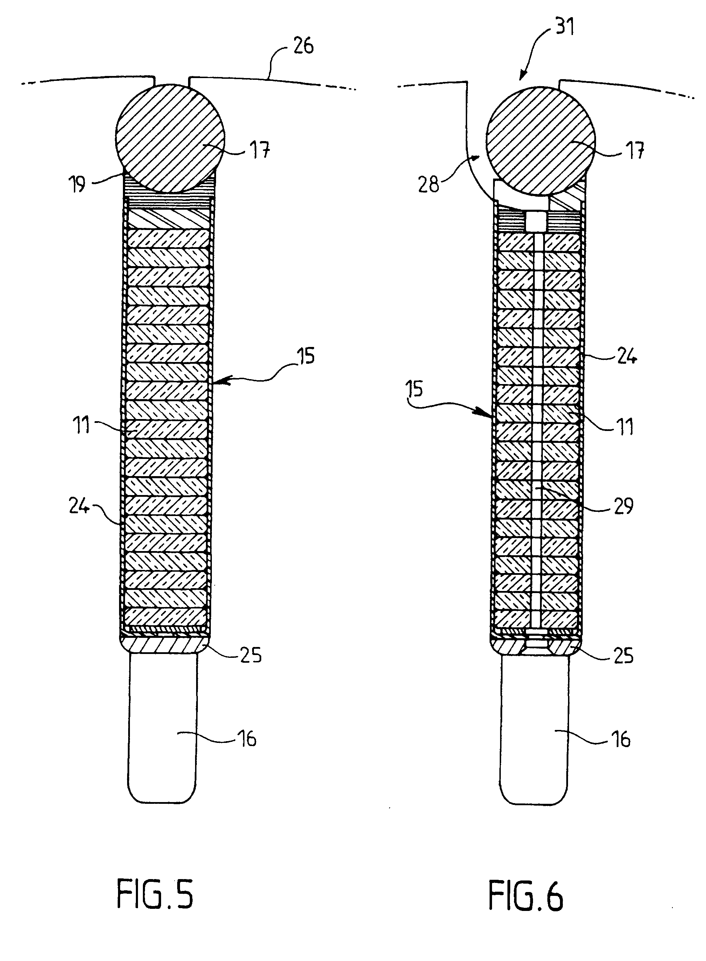

La figure 5 montre une encoche 15 dans l'empilement de tôles, au niveau de la ligne V-V de la figure 4. L'encoche comporte un conducteur 11, un isolant 24 étant placé sur les parois de l'encoche.

Une cale 25 est prévue dans le fond de l'encoche. Dans l'évidement 19, est placée une tige 17 qui cale le conducteur 11 dans l'encoche 15 et ferme cette dernière. La référence 26 désigne le bord extérieur de la tôle.

L'ouverture 16 prévue dans la tôle, en prolongement de l'encoche 15 est libre de tout conducteur.

L'ensemble de ces ouvertures 16 forme, avec des ouvertures correspondantes prévues dans les plateaux d'extrémité 8, des canaux de refroidissement 27, illustrés à la figure 2.

Les frettes 9 sont destinées à assurer la tenue des enroulements électriques et peuvent être en partie réalisées en métal ou en matériau composite, notamment à base de résine époxy.

La référence 23 désigne la partie de raccordement d'un conducteur 11 destinée à être reliée au circuit électrique de la machine.

Les figures 2 et 4 montrent que, dans l'empilement de tôles, sont ménagées des évents 31 pour la ventilation.

La figure 6 montre une encoche 15 dans l'empilement de tôles, au niveau d'un évent de ventilation 31. Cette figure est une vue partielle en coupe selon la ligne VI-VI de la figure 4.

Elle montre que pour certaines tôles 30, au moins certains évidements 19 ou 39 ne présentent pas une forme circulaire, mais semi-circulaire, de façon à ménager un espace libre 28 entre la tôle et les tiges 17, lorsque celles-ci sont en place.

Ces tôles particulières 30 sont mises en regard lorsque toutes les tôles sont empilées de façon à former les évents de ventilation 31.

La figure 6 montre que l'évent 31 communique avec le canal de refroidissement 16, par l'intermédiaire d'un canal 29. Ce canal traverse le conducteur 11 qui est placé dans l'encoche 15.

L'ensemble des évents de ventilation 31, des canaux intermédiaires 29 et des canaux de refroidissement 27, permet de refroidir les conducteurs 11 du rotor.

Les tiges 17 assurent le maintien des tôles entre elles et constituent la structure longitudinale ou axiale du rotor.

Elles sont placées en périphérie de l'empilement.

Elles assurent également une fonction de cale d'encoche, en retenant mécaniquement les conducteurs 11 dans leur encoche.

Les tiges 17 ont également un rôle d'amortisseur électrique, puisqu'elles sont reliées aux plateaux d'extrémité 8. Elles permettent de reboucler les courants de fuite issus de la partie active tôlée, dans le sens axial.

Par ailleurs, dans les exemples illustrés sur les figures, les tiges 17 sont de section circulaire. L'invention n'est cependant pas limitée à cette forme de réalisation, les tiges pouvant être de section quelconque notamment trapézoïdale, rectangulaire ou carrée.

Le comportement mécanique en flexion de l'arbre de rotor selon l'invention est le suivant en fonctionnement : les efforts de compression sont repris par l'empilement de tôles collées et les efforts de traction sont repris par les tiges de serrage 17.

En torsion, le couple électrique est transmis de proche en proche le long de la partie active par les interfaces collés et/ou par les forces d'adhérence entre tôles, dues au frottement.

Les signes de référence insérés après les caractéristiques techniques mentionnées dans les revendications ont pour seul but de faciliter la compréhension de ces dernières et ne sauraient en limiter la portée.

## Revendications

1. Arbre de rotor d'une machine électrique synchrone comportant deux parties d'extrémité (2, 3) usinées, encadrant une partie centrale électriquement active (6) et comportant des conducteurs, ladite partie active (6) étant constituée par un empilement de tôles (10) qui est maintenu rigide par des tiges (17), les tôles comportant une pluralité d'encoches (15) radiales pour les conducteurs (11), **caractérisé en ce que** les encoches (15) de chaque tôle (10) se prolongent vers le bord extérieur (26) de la tôle par un évidement (19) pour le passage des tiges (17), celles-ci assurant le calage des conducteurs dans les encoches et la fermeture de ces dernières.

2. Arbre de rotor selon la revendication 1, **caractérisé en ce que** l'empilement est placé entre deux plateaux d'extrémité (8) et les tiges (17) sont soudées sur lesdits plateaux.

3. Arbre de rotor selon la revendication 2, **caractérisé en ce que** le diamètre de l'empilement est sensiblement identique à celui desdits plateaux d'extrémité (8).

4. Arbre de rotor selon la revendication 3, **caractérisé en ce que** chacun desdits plateaux d'extrémité (8) comporte sur sa face interne un embrèvement (82), l'empilement de tôles étant encastré par chacune de ses extrémités dans lesdits embrèvements.

5. Arbre de rotor selon l'une des revendications précédentes, **caractérisé en ce que** les tiges (17) passant dans les évidements (19) qui prolongent les encoches (15), sont en matériau amagnétique.

6. Arbre de rotor selon l'une des revendications 1 à 5, **caractérisé en ce que** chaque tôle (10) comporte au moins deux zones (18) dépourvues d'encoches mais présentant des évidements (39) pour le passage des tiges (17) qui débouchent de préférence sur le bord extérieur de la tôle.

7. Arbre de rotor selon la revendication 6, **caractérisé en ce que** lest tiges (17) passant dans les évidements (39) desdites zones (18) dépourvues d'encoches, sont en matériau magnétique.

8. Arbre de rotor selon l'une des revendications 1 à 7, **caractérisé en ce que** les tôles (10) sont collées.

9. Arbre de rotor selon l'une des revendications 1 à 8, **caractérisé en ce que** l'empilement de tôles (10) comporte des canaux de refroidissement (27) qui se prolongent, le cas échéant, dans les plateaux d'extrémité (8).

10. Arbre de rotor selon la revendication 9, **caractérisé en ce que** lesdits canaux de refroidissement (27) communiquent, par l'intermédiaire de canaux (29) ménagés dans les conducteurs (11), avec des évents de ventilation (31) prévus sur la périphérie de l'empilement.

11. Arbre de rotor selon l'une des revendications 9 à 10, **caractérisé en ce que** les encoches (15) de chaque tôle (10) se prolongent, du côté opposé au bord extérieur (26) de la tôle, par une ouverture (16) correspondant à un canal de refroidissement (27).

12. Arbre de rotor selon l'une des revendications précédentes, **caractérisé en ce que** les évidements (19, 39) pour les tiges ménagent un espace libre (28) entre la tôle et les tiges (17), lorsque celles-ci sont en place, de façon à créer des évents de ventilation (31).

13. Procédé de fabrication d'un arbre de rotor de machine électrique synchrone comportant deux parties d'extrémité (2, 3) encadrant une partie centrale (6) électriquement active et comportant des conducteurs (11), le procédé consistant à usiner les deux parties d'extrémité (2, 3), à réaliser la partie centrale (6) et à relier les trois parties (2, 3, 6) entre elles, le procédé consistant également à réaliser la partie centrale (6) par les étapes successives suivantes :
- fabrication de tôles (10) présentant des encoches (15) pour les conducteurs (11) et des évidements (19, 39) pour des tiges (17), de manière que chaque encoche (15) se prolonge vers le bord extérieur (26) de la tôle correspondante (10) par un évidement (19) pour le passage des tiges (17) qui permettent d'assurer le calage des conducteurs (11) dans les encoches (15) et la fermeture de ces dernières,
- pré encollage desdites tôles (10),
- empilement desdites tôles (10),
- insertion de l'empilement obtenu entre deux plateaux d'extrémité (8),
- insertion desdites tiges (17) fermant les encoches,
- mise en traction desdites tiges (17),
- soudure desdites tiges (17) sur lesdits plateaux d'extrémité (8),
- insertion desdits conducteurs (11) dans les encoches de l'empilement, les tiges assurant le calage des conducteurs dans les encoches et,
- raccordement des conducteurs (11).

14. Procédé de fabrication selon la revendication 13, dans lequel lesdites encoches (15) et lesdits évidements (19, 39) sont réalisés dans les tôles (10) par découpage, notamment au moyen d'un faisceau laser.

## Claims

1. Rotor shaft of a synchronous electrical machine having two machined end parts (2, 3) framing an electrically active central part (6) having conductors, said active part (6) being formed by a stack of metal sheets (10) which is maintained rigid by means of rods (17), the metal sheets having a plurality of radial notches (15) for the conductors (11), **characterized in that** the notches (15) of each metal sheet (10) are extended towards an exterior edge (26) of the metal sheet by a hole (19) for passage of the rods (17), the latter ensuring immobilization of the conductors in the notches and the closing thereof.

2. Rotor shaft according to claim 1, **characterized in that** the stack is placed between two end plates (8), and the rods (17) are welded onto said plates.

3. Rotor shaft according to claim 2, **characterized in that** the diameter of the stack is substantially identical to that of said end plates (8).

4. Rotor shaft according to claim 3, **characterized in that** each of the end plates (8) has a recess (82) on its internal surface, the stack of metal sheets being fitted at each of its ends into said recesses.

5. Rotor shaft according to one of the preceding claims, **characterized in that** the rods (17) passing through the holes (19) extending the notches (15), are made of a non-magnetic material.

6. Rotor shaft according to one of claims 1 to 5, **characterized in that** each metal sheet (10) has at least two zones (18) devoid of notches but having holes (39) for passage of the rods (17) which preferably open on an exterior edge of the metal sheet.

7. Rotor shaft according to claim 6, **characterized in that** the rods (17) passing through the holes (39) of said zones (18) devoid of notches, are made of a magnetic material.

8. Rotor shaft according to one of claims 1 to 7, **characterized in that** the metal sheets (10) are glued together.

9. Rotor shaft according to one of claims 1 to 8, **characterized in that** the stack of metal sheets (10) has cooling channels (27) which, in case, extend into the end plates (8).

10. Rotor shaft according to claim 9, **characterized in that** said cooling channels (27) communicate, through channels (29) arranged in the conductors (11), with ventilation ducts (31) provided on the periphery of the stack.

11. Rotor shaft according to one of claims 9 to 10, **characterized in that** the notches (15) of each metal sheet (10) are extended, on the side opposite to the exterior edge (26) of the metal sheet, by an opening (16) corresponding to a cooling channel (27).

12. Rotor shaft according to one of the preceding claims, **characterized in that** the holes (19, 39) for the rods provide a free space (28) between the metal sheet and the rods (17), when they are in position, in order to form ventilation ducts (31).

13. Method for manufacturing a rotor shaft of a synchronous electrical machine having two end parts (2, 3) framing an electrically active central part (6) having conductors (11), the method consisting in machining the two end parts (2, 3), making the central part (6) and connecting the three parts (2, 3, 6) together, the method consisting also in making the central parts (6) by the following successive steps:
- manufacturing metal sheets (10) having notches (15) for the conductors (11) and holes (19, 39) for the rods (17), so that each notch (15) is extended toward the exterior edge (26) of the corresponding metal sheet (10) by a hole (19) for passage of the rods (17) enabling to provide immobilization of the conductors (11) in the notches (15) and the closing thereof,
- pre-gluing said metal sheets (10),
- stacking said metal sheets (10),
- inserting the stack thus obtained between two end plates (8),
- inserting said rods (17) closing the notches,
- tensioning said rods (17),
- welding said rods (17) onto said end plates (8),
- inserting said conductors (11) in the notches of the stack, the rods providing the immobilization of the conductors in the notches, and
- connecting the conductors (11).

14. Process for manufacturing according to claim 13, in which said notches (15) and said holes (19, 39) are made in the metal sheets (10) by cutting, in particular by means of a laser beam.

## Patentansprüche

1. Rotorwelle für eine Elektrosynchronmaschine, mit zwei bearbeiteten Endabschnitten (2, 3), die einen elektrisch aktiven Mittelabschnitt (6) umgreifen, und mit Leitern, wobei der aktive Abschnitt (6) aus einem Blechpaket (10) besteht, das über Stifte (17) starr gehalten wird, wobei die Bleche eine Mehrzahl von radialen Nuten (15) für die Leiter (11) enthalten, **dadurch gekennzeichnet, dass** die Nuten (15) eines jeden Blechs (10) über eine Ausnehmung (19) zum Durchtritt der Stifte (17) zum Außenrand (26) des Blechs hin ragen, wobei diese Stifte das Verkeilen der Leiter in den Nuten und das Verschließen der letztgenannten gewährleisten.

2. Rotorwelle nach Anspruch 1, **dadurch gekennzeichnet, dass** das Paket zwischen zwei Endplatten (8) angeordnet ist und die Stifte (17) mit den Platten verschweißt sind.

3. Rotorwelle nach Anspruch 2, **dadurch gekennzeichnet, dass** der Durchmesser des Pakets im wesentlichen identisch zu dem der Endplatten (8) ist.

4. Rotorwelle nach Anspruch 3, **dadurch gekennzeichnet, dass** eine jede Endplatte (8) an ihrer Innenseite eine Senkung (82) enthält, wobei das Blechpaket mit jedem seiner Enden in den Senkungen eingelassen ist.

5. Rotorwelle nach einem der vorangehenden Ansprüche, **dadurch gekennzeichnet, dass** die Stifte (17), die in den die Nuten (15) fortsetzenden Ausnehmungen (19) verlaufen, aus nichtmagnetischem Material bestehen.

6. Rotorwelle nach einem der Ansprüche 1 bis 5, **dadurch gekennzeichnet, dass** jedes Blech (10) zumindest zwei Bereiche (18) enthält, die keine Nuten aufweisen, jedoch mit Ausnehmungen (39) für den Durchtritt der Stifte (17) versehen sind, die vorzugsweise an den Außenrand des Blechs münden.

7. Rotorwelle nach Anspruch 6, **dadurch gekennzeichnet, dass** die in den Ausnehmungen (39) der nutfreien Bereiche (18) verlaufenden Stifte (17) aus magnetischem Material bestehen.

8. Rotorwelle nach einem der Ansprüche 1 bis 7, **dadurch gekennzeichnet, dass** die Bleche (10) verklebt sind.

9. Rotorwelle nach einem der Ansprüche 1 bis 8, **dadurch gekennzeichnet, dass** das Blechpaket (10) Kühlkanäle (27) enthält, die sich gegebenenfalls in den Endplatten (8) fortsetzen.

10. Rotorwelle nach Anspruch 9, **dadurch gekennzeichnet, dass** die Kühlkanäle (27) über in den Leitern (11) ausgeführten Kanälen (29) mit Lüftungsschächten (31) in Verbindung stehen, die am Umfang des Blechpakets vorgesehen sind.

11. Rotorwelle nach einem der Ansprüche 9 und 10, **dadurch gekennzeichnet, dass** die Nuten (15) eines jeden Blechs (10) sich auf der dem Außenrand (26) des Blechs gegenüberliegenden Seite über eine Öffnung (16) fortsetzen, die einem Kühlkanal (27) entspricht.

12. Rotorwelle nach einem der vorangehenden Ansprüche, **dadurch gekennzeichnet, dass** die Ausnehmungen (19, 39) für die Stifte einen Freiraum (28) zwischen dem Blech und den Stiften (17) bilden, wenn diese sich in Stellung befinden, so dass Lüftungsschächte (31) gebildet werden.

13. Verfahren zum Herstellen einer Rotorwelle einer Elektrosynchronmaschine, mit zwei bearbeiteten Endabschnitten (2, 3), die einen elektrisch aktiven Mittelabschnitt (6) umgreifen, wobei das Verfahren darin besteht, die beiden Endabschnitte (2, 3) zu bearbeiten, den Mittelabschnitt (6) auszubilden und die drei Abschnitte (2, 3, 6) miteinander zu verbinden, wobei das Verfahren ferner darin besteht, den Mittelabschnitt (6) durch nachfolgende, aufeinanderfolgende Schritte auszubilden:
- Herstellen von Blechen (10) mit Nuten (15) für die Leiter (11) und mit Ausnehmungen (19, 39) für Stifte (17), derart, dass jede Nut (15) über eine Ausnehmung (19) zum Durchtritt der Stifte (17) zum Außenrand (26) des entsprechenden Blechs (10) hin ragt, wobei diese Stifte das Verkeilen der Leiter (11) in den Nuten (15) und das Verschließen der letztgenannten gewährleisten,
- Vorverkleben der Bleche (10),
- Stapeln der Bleche (10),
- Einführen des erhaltenen Pakets zwischen zwei Endplatten (8),
- Einführen der Stifte (17), welche die Nuten verschließen,
- Beaufschlagen der Stifte (17) mit Zugkraft,
- Verschweißen der Stifte (17) mit den Endplatten (8),
- Einführen der Leiter (11) in die Nuten des Pakets, wobei die Stifte das Verkeilen der Leiter in den Nuten gewährleisten, und
- Anschließen der Leiter (11).

14. Herstellungsverfahren nach Anspruch 13, bei dem die Nuten (15) und die Ausnehmungen (19, 39) durch Ausschneiden, insbesondere mittels Laserstrahl, in den Blechen (10) hergestellt werden.
